# EUROPEAN PATENT APPLICATION

(11) **EP 2 050 905 A2**
(43) Date of publication of application: **22.04.2009**
(21) Application number: 07122644.3
(22) Date of filing: 07.12.2007
(51) Int. Cl.: E05D 7/04

(54) **Hinge device for tailgate glass**

(30) Priority: 18.10.2007 KR 20070104964
(71) Applicant: HYUNDAI MOTOR COMPANY, Seoul (KR)
(72) Inventor: Hwang, Insu, 445-130, Gyeonggi-do (KR)
(74) Representative: Viering, Jentschura & Partner

(57) **Abstract**

The present invention provides a hinge device capable of adjusting an angle of a flip-up glass, which is rotatably provided to a tailgate so as to open or close the tailgate, at multiple steps, thereby improving user's convenience. The hinge device for a tailgate glass includes a base hinge, a rotary hinge, a glass hinge, and a turning angle adjusting unit. The base hinge is fixed to a tailgate and has multistage fixing gear teeth formed in an opening / closing direction of a flip-up glass. The rotary hinge is connected to base hinge by a connecting pin so as to rotate with respect to the base hinge. The turning angle adjusting unit adjusts a relative moving stroke of glass hinge with respect to rotary hinge and thus selectively changes an engagement position between fixing gear teeth and locking protrusion, thereby adjusting the angle of glass hinge with respect to base hinge at multiple steps.

## Description

### CROSS-REFERENCE TO RELATED APPLICATIONS

The present application is based on, and claims priority from, Korean Application Serial Number 10-2007-0104964, filed on October 18, 2007, the disclosure of which is hereby incorporated by reference herein in its entirety.

### FIELD OF THE INVENTION

The present invention relates to a hinge device for a tailgate glass, and more particularly, to a hinge device for a flip-up glass of a tailgate capable of adjusting an angle of a flip-up glass, which is provided so as to open or close the tailgate, at multiple steps.

### BACKGROUND OF THE INVENTION

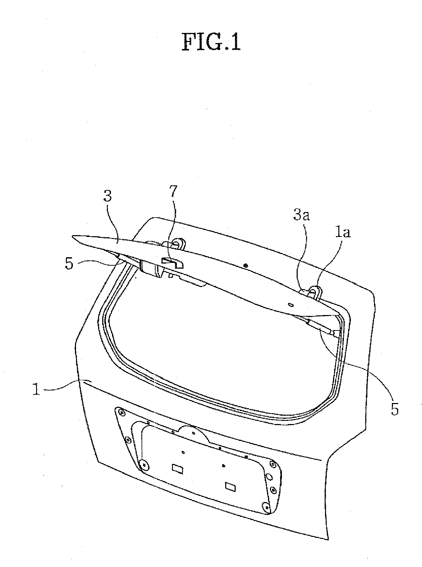

In general, a tailgate that is opened or closed is provided at the rear portion of a sport utility vehicle (SUV). As shown in FIG. 1, a tailgate 1 is provided with a flip-up glass 3 that opens or closes the tailgate.

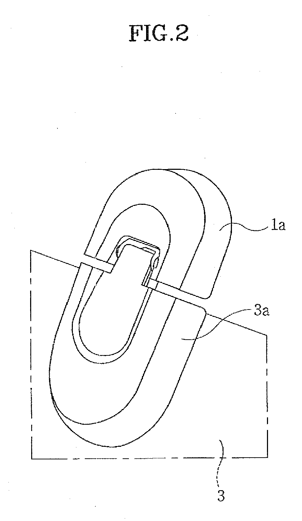

As shown in FIG. 2, flip-up glass 3 is provided to open or close tailgate 1 by a base hinge 1a and a glass hinge 3a. The base hinge is fixed to an upper portion of tailgate 1. The glass hinge is hinge-connected to base hinge 1a and is fixed to an upper portion of flip-up glass 3.

In this case, flip-up glass 3 is provided with gas lifters 5 that maintain flip-up glass 3 opening tailgate 1. One end of each of gas lifters 5 is connected to tailgate 1, and the other end thereof is connected to flip-up glass 3.

However, the angle of the above-mentioned flip-up glass 3 in the related art is limited by the maximum stroke of each of gas lifters 5 when flip-up glass 3 is opened. For this reason, there is a problem in that the open angle of flip-up glass 3 with respect to tailgate 1 cannot be adjusted.

Therefore, when flip-up glass 3 is opened, a short user cannot catch a handle 7 provided at the lower portion of flip-up glass 3, which causes user's inconvenience. When flip-up glass 3 is opened at a location not enough to be open flip-up glass 3, there is also a problem in that flip-up glass 3 is damaged due to interference.

### SUMMARY OF THE INVENTION

Embodiments of the present invention provide a hinge device capable of adjusting an angle of a flip-up glass, which is rotatably provided to a tailgate so as to open or close the tailgate, at multiple steps, thereby improving user's convenience.

According to an embodiment of the present invention, a hinge device for a tailgate glass, the hinge device includes a base hinge, a rotary hinge, a glass hinge, and a turning angle adjusting unit. The base hinge is fixed to a tailgate and has multistage fixing gear teeth formed in an opening / closing direction of a flip-up glass. The rotary hinge is connected to the base hinge by a connecting pin so as to rotate with respect to the base hinge. The glass hinge receives the rotary hinge, is provided to move only in one direction crossing an axial direction of the rotary hinge, includes a locking protrusion selectively engaged with one fixing gear tooth of the multistage fixing gear teeth, and fixes the flip-up glass. The turning angle adjusting unit adjusts a relative moving stroke of the glass hinge with respect to the rotary hinge and thus selectively changes an engagement position between the fixing gear teeth and the locking protrusion, thereby adjusting the angle of the glass hinge with respect to the base hinge at multiple steps.

According to the embodiment of the present invention, the hinge device can adjust an angle of the flip-up glass, which is rotatably provided to a tailgate so as to open or close the tailgate, at multiple steps according to user's request. Therefore, it is possible to expect the improvement of the market quality and user's convenience for a flip-up glass.

Further, since the angle of a flip-up glass can be maintained constant due to the engagement structure of the hinge, parts such as gas lifters do not need to be provided. As a result, it is possible to expect the reduction in manufacturing cost.

### BRIEF DESCRIPTION OF THE DRAWINGS

For a better understanding of the nature and objects of the present invention, reference should be made to the following detailed description with the accompanying drawings, in which:
FIG. 1 is a view showing a hinge device for a tailgate glass in the related art;
FIG. 2 is an enlarged view of a hinge shown in FIG. 1;

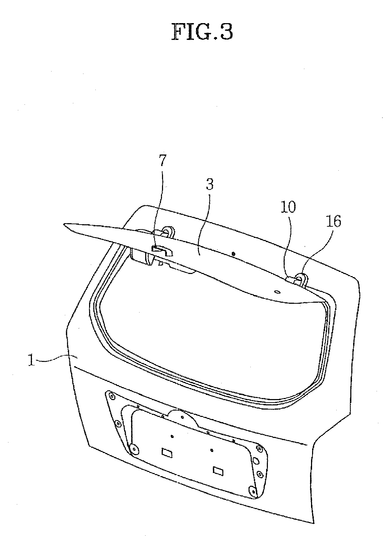

FIG. 3 is a view showing a hinge device for a tailgate glass according to an embodiment of the present invention;

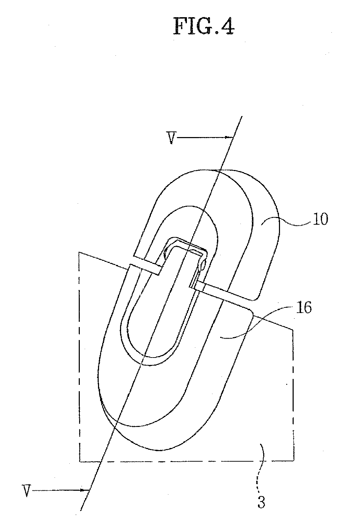

FIG. 4 is a enlarged view of a hinge shown in FIG. 3; and

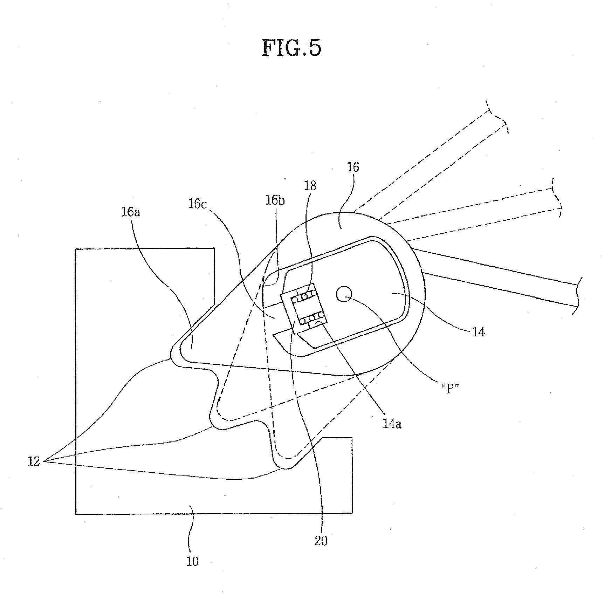

FIG. 5 is a cross-sectional view taken along a line V-V of FIG. 4.

### DETAILED DESCRIPTION OF THE PREFERRED EMBODIMENTS

A preferred embodiment of the present invention will be described in detail below with reference to accompanying drawings.

As shown in drawings, a hinge device for a tailgate glass according to an embodiment of the present invention includes a base hinge 10, a rotary hinge 14, a glass hinge 16, and a turning angle adjusting unit.

Base hinge 10 is fixed to an upper portion of a tailgate 1, and has multistage fixing gear teeth 12 formed in an opening / closing direction of a flip-up glass 3 that is provided in a tailgate 1.

Rotary hinge 14 is connected to base hinge 10 by a connecting pin P so as to rotate with respect to base hinge 10. Fo r this purpose, connecting pin P passes through the connection portions of rotary hinge 14 and base hinge 10.

While receiving rotary hinge 14, glass hinge 16 is provided to move only in one specific direction of the directions orthogonal to an axial direction of rotary hinge 14 (a direction where connecting pin P is provided). Further, glass hinge 16 includes a locking protrusion 16a that is selectively engaged with one of multistage fixing gear teeth 12 so as to set an angle of rotary hinge 14 with respect to fixing gear teeth 12. In addition, the upper portion of flip-up glass 3, which is provided so as to open or close tailgate 1, is fixed to and supported by glass hinge 16.

The turning angle adjusting unit adjusts a relative moving stroke of glass hinge 16 with respect to rotary hinge 14 and thus selectively changes an engagement position between fixing gear teeth 12 and locking protrusion 16a, thereby functioning to adjust the angle of glass hinge 16 with respect to base hinge 10 at multiple steps.

For this purpose, glass hinge 16 includes a slot 16b, which is elongated in a direction crossing an axial direction of rotary hinge 14, therein. Slot 16b has the same level as rotary hinge 14 and a width larger than the width of rotary hinge 14.

Accordingly, glass hinge 16 is provided to move relative to rotary hinge 14 only in one direction crossing the axial direction of connecting pin P

Further, a groove 14a is formed on one side of rotary hinge 14 in the turning angle adjusting unit so as to face multistage fixing gear teeth 12. A spring 18 is received in groove 14a, and a protrusion 16c that protrudes so as to press spring 18 is formed on the inner surface of slot 16b.

Furthermore, a plug 20, of which backside is elastically supported by spring 18 and frontside faces protrusion 16c, is provided in groove 14a. Accordingly, while compressing spring 18 through plug 20, protrusion 16c is inserted into groove 14a.

The operation of the hinge device for a tailgate glass according to the embodiment of the present invention will be described in detail below.

In order to allow flip-up glass 3 to open or close tailgate 1, a user catches a handle 7 provided at the lower portion of flip-up glass 3 and lifts flip-up glass 3.

In this case, locking protrusion 16a of glass hinge 16 is selectively engaged with multistage fixing gear teeth 12, so that an open angle of flip-up glass 3 can be adjusted with respect to base hinge 10.

That is, the angle of glass hinge 16 with respect to base hinge 10 is determined by the engagement position of locking protrusion 16a with respect to multistage fixing gear teeth 12. In this case, while glass hinge 16 moves in a width direction outside rotary hinge 14 that is hinge-connected to base hinge 10 by connecting pin P, locking protrusion 16a is disengaged from multistage fixing gear teeth 12.

In other words, when glass hinge 16 moves relative to rotary hinge 14 in a width direction, protrusion 16c presses plug 20 and is inserted into groove 14a formed in rotary hinge 14 while compressing spring 18. Subsequently, when the angle of glass hinge 16 with respect to base hinge 10 is adjusted and an operation force applied to flip-up glass 3 is then removed, protrusion 16c of glass hinge 16 is pushed by the restoring force of spring 18 so as to be separated from groove 14a to the outside. For this reason, locking protrusion 16a is engaged with multistage fixing gear teeth 12 again, so that the angle of f1ip-up glass 3 can be maintained constant.

In this case, since the angle of flip-up glass 3 with respect to tailgate 1 can be vary depending on multistage fixing gear teeth 12 formed in base hinge 10, the angle of flip-up glass 3 can be set to various values.

Further, since the angle of glass hinge 16 with respect to base hinge 10 is maintained due to the engagement between multistage fixing gear teeth 12 and locking protrusion 16a as described above, gas lifters do not need to be used to maintain the angle of flip-up glass 3 unlike in the related art.

## Claims

1. A hinge device for a tailgate glass, the hinge device comprising:
a base hinge that is fixed to a tailgate and has multistage fixing gear teeth formed in an opening / closing direction of a flip-up glass;
a rotary hinge that is connected to the base hinge by a connecting pin so as to rotate with respect to the base hinge;
a glass hinge that receives the rotary hinge, is provided to move only in one direction crossing an axial direction of the rotary hinge, includes a locking protrusion selectively engaged with one fixing gear tooth of the multistage fixing gear teeth, and fixes the flip-up glass; and
a turning angle adjusting unit that adjusts a relative moving stroke of the glass hinge with respect to the rotary hinge and thus selectively changes an engagement position between the fixing gear teeth and the locking protrusion, thereby adjusting the angle of the glass hinge with respect to the base hinge at multiple steps.

2. The hinge device as defined in claim 1, wherein the glass hinge includes a slot that has the same level as the rotary hinge and a width larger than the width of the rotary hinge.

3. The hinge device as defined in claim 2, wherein the turning angle adjusting unit includes:
a groove formed on one side of the rotary hinge;
a spring received in the groove; and
a protrusion that protrudes from the inner surface of the slot so as to press the spring.

4. The hinge device as defined in claim 3, wherein a plug, of which backside is elastically supported by the spring and frontside faces the protrusion, is provided in the groove.
